# EUROPÄISCHE PATENTSCHRIFT

(11) **EP 0 953 936 B1**
(45) Veröffentlichungstag und Bekanntmachung des Hinweises auf die Patenterteilung: **09.05.2001**
(21) Anmeldenummer: 98102788.1
(22) Anmeldetag: 17.02.1998
(51) Int. Cl.: G06K 19/07

(54) **Datenträger sowohl für den kontaktlosen als auch den kontaktbehafteten Betrieb**
Data carrier for use either with or without contact
Porteur d'information fonctionnant avec ou sans contact

(43) Veröffentlichungstag der Anmeldung: 03.11.1999
(73) Patentinhaber: Infineon Technologies AG, 81669 München (DE)
(72) Erfinder: Reiner, Robert, 85579 Neubiberg (DE)
(74) Vertreter: Zedlitz, Peter, Dipl.-Inf.

(56) Entgegenhaltungen:
- WO-A-96/38814
- DE-A- 19 531 372
- DE-C- 3 935 364
- FR-A- 2 752 076

## Beschreibung

Die Erfindung betrifft einen Datenträger mit einer ersten Schaltung, mit einer Spule, die über eine Kontaktlos-Schnittstelle mit der ersten Schaltung verbunden ist, wobei die Kontaktlos-Schnittstelle aus einem in der Spule induzierten Signal zumindest eine Versorgungs-Gleichspannung, ein Taktsignal und ein einer Modulation des induzierten Signals entsprechendes Datensignal gewinnt und mit einer Anzahl von mit der ersten Schaltung verbundenen Kontakten zum Empfang zumindest einer Versorgungsspannung, eines Taktsignals und eines Datensignals, wobei der Versorgungsspannungs-Kontakt über ein Schaltelement mit der ersten Schaltung verbunden ist.

Ein solcher Datenträger ist aus der WO 96/38814 bekannt. Er ist dort als Chipkarte, genauer als Kombi-Chipkarte, ausgebildet. Erfindungsgemäße Datenträger können jedoch auch mit anderen Gehäuseformen realisiert werden. Beim bekannten Datenträger ist zwischen dem Versorgungsspannungskontakt und einer logischen Schaltung eine Diode derart gepolt angeordnet, daß sie ein Durchgreifen der am ebenfalls mit demselben Versorgungsspannungseingang der logischen Schaltung verbundenen Ausgang des Gleichrichters der Kontaktlos-Schnittstelle anliegenden Versorgungs-Gleichspannung auf den Kontakt verhindert.

Eine solche Diode benötigt jedoch einerseits eine gewisse Mindestspannung, damit sie überhaupt leitet und weist andererseits im Durchlaßbetrieb einen Spannungsabfall auf, der störend wirkt, wenn eine niedrige Versorgungsspannung angestrebt wird.

Auch die DE 195 31 372 A1 offenbart eine Chipkarte, die sowohl für den kontaktlosen als auch für den kontaktbehafteten Betrieb geeignet ist. Dort ist ein Schalter vorgesehen, der ein Durchschalten einer Spannung am Versorgungskontakt zu einem Speicher nur abhängig vom Zustand eines Steuersignals eines Mikroprozessors ermöglicht und diese ansonsten mit Mitteln für den kontaktlosen Betrieb verbindet. Bei der dortigen Chipkarte wird durch diesen Schalter auch ein Betrieb des Mikroprozessors von der Kontaktlos-Schnittstelle her verhindert.

Es ist die Aufgabe der Erfindung, einen Datenträger der genannten Art derart weiterzubilden, daß einerseits eine in der Spule induzierte Spannung nicht am Versorgungsspannungskontakt anliegt und andererseits an einem dies bewirkenden Sperrelement im Durchlaßbetrieb keine nennenswerte Spannung abfällt. Außerdem soll ein schaltungstechnisch gleichberechtigter Zugriff sowohl von den kontaktlosen als auch kontaktbehafteten Mitteln her auf einen Mikroprozessor gewährleistet sein.

Die Aufgabe wird durch die Merkmale des Anspruchs 1 gelöst.

Steuerbare Schaltelemente werden in integrierter Schaltungstechnik zumeist als Transistoren ausgebildet und weisen nur einen sehr geringen Durchlaßwiderstand auf, so daß der Spannungsabfall an einem solchen Schaltelement bei Betrieb des Datenträgers über die Kontakte vernachlässigbar ist. Außerdem sind durch den geringen Spannungsabfall auch kleinere Versorgungsspannungen möglich. In erfindungsgemäßer Weise ist das Vorhandensein eines Taktsignals nötig für das Leitfähigschalten des Schaltelements. Eine zweite logische Schaltung ist vorgesehen, um das Vorhandensein des Taktsignals festzustellen und das Schaltelement entsprechend anzusteuern.

In vorteilhafter Ausbildung der Erfindung kann die zweite logische Schaltung sowohl autark sein, also ihre Versorgungsspannung aus dem Taktsignal selbst gewinnen, als auch an die Versorgungsspannung angeschlossen sein.

Die Verwendung des Taktsignals als Kriterium für das Durchschalten der Versorgungsspannung zu der ersten logischen Schaltung hat den Vorteil, daß die Voraussetzung des Vorhandenseins eines Taktsignals keine einschränkende Bedingung ist, da die erste logische Schaltung ohne das Taktsignal nicht arbeiten würde, selbst wenn die Versorgungsspannung anliegen würde. Es wird also in vorteilhafter Weise ein ohnehin nötiges Signal als Schaltbedingung herangezogen.

Der kontaktlose Betrieb erfordert üblicherweise einen Versorgungsspannungsregler, da die Betriebsspannung des Datenträgers aus dem von der Spule empfangenen Signal gewonnen wird und die Amplitude des Signals aufgrund der Abhängigkeit vom Abstand des Datenträgers zu einem Sender stark schwanken kann. Üblicherweise ist die geregelte Spannung geringer als die von den Kontakten gelieferte Spannung, so daß der Regler bei Kontaktbetrieb überlastet wäre. In erfindungsgemäßer Weiterbildung wird das Ausgangssignal der das Taktsignal detektierenden zweiten logischen Schaltung dazu benutzt, den Regler inaktiv zu schalten.

Die Erfindung wird nachfolgend anhand von Ausführungsbeispielen mit Hilfe von Figuren näher erläutert. Dabei zeigen:
- Figur 1: ein erstes Prinzipschaltbild eines erfindungsgemäßen Datenträgers, und
- Figur 2: ein zweites Prinzipschaltbild eines erfindungsgemäßen Datenträgers.

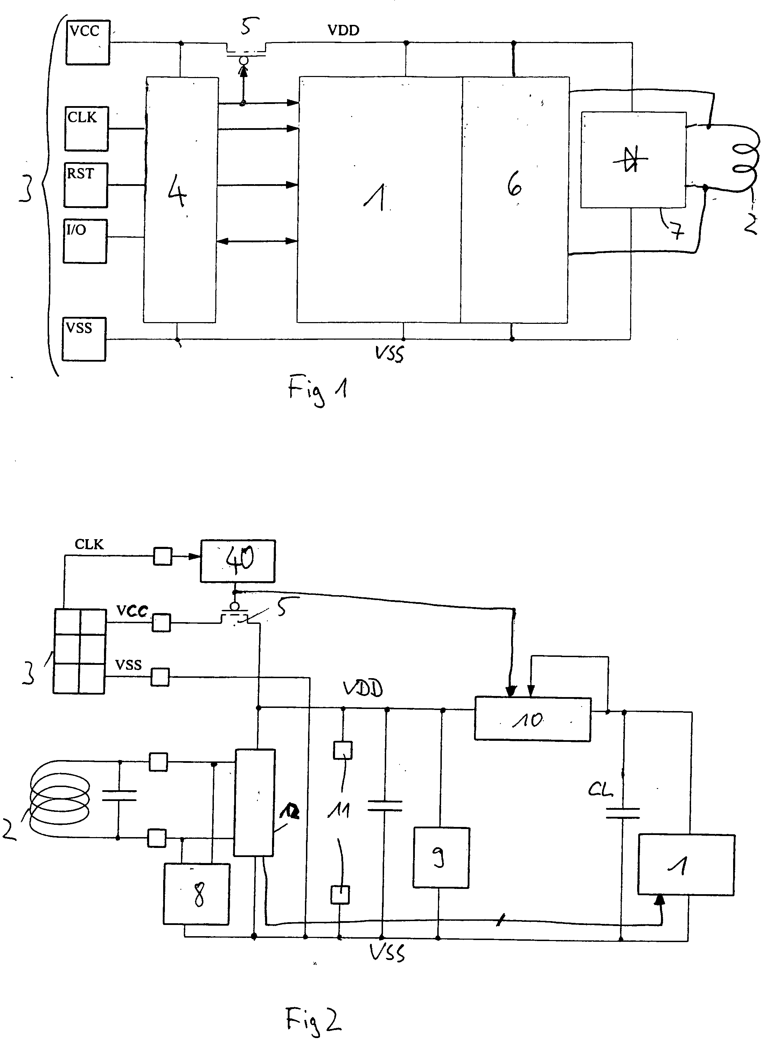

Figur 1 zeigt eine erste logische Schaltung 1, die vorzugsweise mit einem Mikroprozessor gebildet ist und außerdem die üblicherweise für den Betrieb eines Mikroprozessors nötigen und sinnvollen Schaltungen wie ein RAM, ein ROM oder einen nicht-flüchtigen Speicher aufweisen soll. Die erste logische Schaltung 1 ist an zwei Versorgungsspannungsleitungen VDD und VSS angeschlossen. Die Versorgungsspannungsleitungen VDD und VSS sind einerseits mit einem Gleichrichter und Glättungsnetzwerk 7 verbunden, das aus einem, von einer Spule 2 empfangenen Signal die für den kontaktlosen Betrieb des Datenträgers nötige Betriebsspannung ableitet.

Die Versorgungsspannungsleitungen VDD, VSS sind außerdem mit Kontakten VCC, VSS eines Kontaktfeldes 3 verbunden, um im kontaktbehafteten Betrieb des Datenträgers die Versorgungsspannung für die Schaltungsteile zur Verfügung zu stellen.

Die Versorgungsspannungsleitung VDD ist in erfindungsgemäßer Weise über ein als PMOS-Transistor ausgebildetes Schaltelement 5 mit dem Versorgungsspannungskontakt VCC verbunden. Das Schaltelement 5 wird von einer zweiten logischen Schaltung 4 angesteuert, die ihrerseits mit dem Taktsignal-Kontakt CLK verbunden ist. Die zweite logische Schaltung 4 detektiert das Vorhandensein eines Taktsignals am Taktsignalkontakt CLK und aktiviert bei Vorhandensein eines Taktsignals das Schaltelement 5, so daß der Versorgungsspannungskontakt VCC mit der Versorgungsspannungsleitung VDD verbunden ist und somit die erste logische Schaltung 1 mit einer Versorgungsspannung von den Kontakten 3 versorgt wird.

Der das Vorhandensein eines Taktsignals anzeigende Ausgang der zweiten logischen Schaltung 4 ist außerdem direkt mit der ersten logischen Schaltung 1 verbunden, um der ersten logischen Schaltung anzuzeigen, daß die Versorgungsspannung von den Kontakten 3 kommt. Die erste logische Schaltung 1 kann diese Information benutzen, um einen bestimmten Betriebszustand einzunehmen, in dem beispielsweise bestimmte Zugriffsrechte auf einen Speicherbereich eingestellt sind.

Die zweite logische Schaltung 4 ist in der Darstellung gemäß Figur 1 außerdem mit einem Reset- RST und einem Eingangs-/-Ausgangsanschluß I/O verbunden und leitet die von dort stammenden Signale an die erste logische Schaltung 1 weiter. Die zweite logische Schaltung 4 kann in vorteilhafter Weise Schutzstrukturen und auch Filter enthalten. Im Beispiel nach Figur 1 ist die zweite logische Schaltung 4 mit den Versorgungsspannungskontakten VCC, VSS verbunden und kann somit die ankommenden Takt-, Reset- und Eingangs-/Ausgangssignale nur verarbeiten, wenn eine Versorgungsspannung anliegt.

Der Datenträger gemäß Figur 1 weist außerdem eine Kontaktlos-Schnittstellenschaltung 6 auf, die das von der Spule 2 empfangene Signal aufbereitet, insbesondere daraus ein Taktsignal sowie die aufgrund einer Modulation des Signals enthaltenen Daten gewinnt und an die erste logische Schaltung 1 weiterleitet.

Die datenverarbeitende erste logische Schaltung 1 des Datenträgers gemäß Figur 1 ist also über die Versorgungsleitungen VDD, VSS immer mit der den kontaktlosen Empfangsteil darstellenden Spule 2 verbunden, während eine Verbindung zu den Versorgungsspannungskontakten des Kontaktfeldes 3 über ein Schaltelement 5 nur erfolgt, wenn vom Kontaktfeld 3 ein Taktsignal geliefert wird. Durch das Schaltelement 5 wird hirdurch einerseits wirksam verhindert, daß die von der Spule 2 über die Gleichrichter- und Glättungsschaltung 7 gelieferte Versorgungsspannung auch an dem Kontaktfeld 3 anliegt und dort beispielsweise mittels eines daraufliegenden Fingers kurzgeschlossen werden kann. Andererseits ist der Spannungsabfall am gesteuerten Schaltelement 5 bei kontaktbehaftetem Betrieb über die Kontakte 3 nur sehr gering und außerdem kann das das Schaltelement 5 ansteuernde Signal von der zweiten logischen Schaltung 4 auch dazu benutzt werden, der ersten logischen Schaltung 1 anzuzeigen, daß die Versorgungsspannung vom Kontaktfeld 3 kommt. Dies ist deshalb nötig, weil im Gegensatz zur DE 195 31 372 A1 der in der ersten logischen Schaltung 1 enthaltene Mikroprozessor schaltungstechnisch völlig gleichberechtigt sowohl mit der kontaktlosen als auch mit der kontaktbehafteten Schnittstelle verbunden ist und somit auch über die Spule 2 angesteuert werden kann.

In Figur 2 ist ein Datenträger dargestellt, bei dem im Gegensatz zum Datenträger gemäß Figur 1 die zweite logische Schaltung 40 autark ausgestaltet ist, das heißt nicht mit den Versorgungsspannungskontakten VCC, VSS verbunden ist. Die zweite logische Schaltung 40 gewinnt ihre Versorgungsenergie direkt aus dem Taktsignal und kann zu diesem Zweck beispielsweise einen Gleichrichter enthalten.

In der Darstellung gemäß Figur 2 sind ansonsten gleiche Teile mit gleichen Bezugszeichen wie in Figur 1 versehen. Im Unterschied zum Datenträger gemäß Figur 1 ist eine Kontaktlos-Schnittstellenschaltung 12 dargestellt, die sowohl das Gleichrichter- und Glättungsnetzwerk als auch die datenaufbereitenden Schaltungsteile enthält. Zu diesem Zweck sind Datenleitungen zur ersten logischen Schaltung 1 vorgesehen. Der Datenträger gemäß Figur 2 weist außerdem eine Wechselspannungsbegrenzungsschaltung 8 sowie eine Gleichspannungsbegrenzungsschaltung 9 auf, um die erste logische Schaltung 1 vor einer Überlastung im kontaktlosen Betrieb zu schützen.

Aufgrund der entfernungsabhängigen starken Schwankungen in der Amplitude der Betriebsspannungen VDD, VSS ist ein Spannungsregler 10 vorgesehen, der die Spannung an der ersten logischen Schaltung 1 mittels eines Kondensators CL auf einem Wert von beispielsweise 2,1 Volt hält.

Da dieser Regler 10 auch die Versorgungsspannung im kontaktbehafteten Betrieb vom Kontaktfeld 3 regeln würde, diese Spannung üblicherweise jedoch höher ist als die Versorgungsspannung im kontaktlosen Betrieb, würde er stark überlastet und möglicherweise sogar zerstört werden. Aus diesem Grund wird er in Weiterbildung der Erfindung vom Ausgangssignal der zweiten logischen Schaltung 40 bei Vorhandensein eines Taktsignals am Kontaktfeld 3 entweder ausgeschaltet oder auf eine so hohe Regelspannung eingestellt, daß er nicht überlastet werden kann.

Die Spannungsbegrenzerschaltungen sowie der Spannungsregler können natürlich auch in einem Datenträger gemäß Figur 1 angewendet werden. Sämtliche Schaltungsteile sind üblicherweise als integrierte Schaltung auf einem einzigen Halbleiterchip realisiert. Es ist natürlich auch möglich, mehrere Halbleiterchips hierfür zu verwenden.

In manchen Fällen kann es erwünscht sein, einen größeren Energiespeicher für den kontaktlosen Betrieb zur Verfügung zu haben, als er in integrierter Schaltungstechnik hergestellt werden kann. Zu diesem Zweck können in Weiterbildung der Erfindung externe Anschlüsse 11 nach außen geführt werden, um dort einen externen Kondensator anzuschließen.

## Patentansprüche

1. Datenträger, insbesondere Chipkarte,
mit einer ersten logischen Schaltung (1),
mit zumindest einer Spule (2), die über eine Kontaktlos-Schnittstelle mit der ersten logischen Schaltung (1) verbunden ist, wobei die Kontaktlos-Schnittstelle aus einem in der Spule (2) induzierten Signal zumindest eine Versorgungs-Gleichspannung (VDD, VSS), ein Taktsignal und ein einer Modulation des induzierten Signals entsprechendes Datensignal gewinnt,
mit einer Anzahl von Kontakten (3) zum Empfangen zumindest einer Versorgungsspannung, eines Taktsignals und eines Datensignals, die mit der ersten logischen Schaltung (1) verbunden sind,
wobei der Versorgungsspannungs-Kontakt (VCC) über ein steuerbar ausgebildetes Schaltelement (5) mit der ersten logischen Schaltung (1) verbunden ist, und mit einer zweiten logischen Schaltung (4; 40), die eingangsseitig mit dem Taktsignal-Kontakt (CLK) und ausgangsseitig mit dem Steuereingang des Schaltelements (5) verbunden ist.

2. Datenträger nach Anspruch 1, **dadurch gekennzeichnet**, daß die zweite logische Schaltung (40) ein Gleichrichterelement (7; 12) zur Gewinnung einer Versorgungsspannung aus dem Taktsignal aufweist.

3. Datenträger nach Anspruch 1, **dadurch gekennzeichnet**, daß die zweite logische Schaltung (4) mit den Versorgungsspannungs-Kontakten (VCC, VSS) verbunden ist.

4. Datenträger nach einem der vorherigen Ansprüche, **dadurch gekennzeichnet,** daß der Ausgang der zweiten logischen Schaltung (4; 40) mit einem Steuereingang eines der ersten logischen Schaltung (1) vorgeschalteten Spannungsreglers (10) verbunden ist.

## Claims

1. Data storage medium, in particular a smart card, having a first logic circuit (1), having at least one coil (2) which is connected via a contactless interface to the first logic circuit (1), with the contactless interface using a signal induced in the coil (2) to obtain at least one DC supply voltage (VDD, VSS), a clock signal and a data signal corresponding to modulation of the induced signal,
having a number of contacts (3) for receiving at least one supply voltage, a clock signal and a data signal, which are connected to the first logic circuit (1),
with the supply voltage contact (VCC) being connected via a controllable switching element (5) to the first logic circuit (1),
and having a second logic circuit (4; 40) which is connected on the input side to the clock signal contact (CLK) and on the output side to the control input of the switching element (5).

2. Data storage medium according to Claim 1, **characterized** in that the second logic circuit (40) has a rectifier element (7; 12) for obtaining a supply voltage from the clock signal.

3. Data storage medium according to Claim 1, **characterized** in that the second logic circuit (4) is connected to the supply voltage contacts (VCC, VSS).

4. Data storage medium according to one of the preceding claims, **characterized** in that the output of the second logic circuit (4; 40) is connected to a control input of a voltage regulator (10) which is connected upstream of the first logic circuit (1).

## Revendications

1. Support de données, notamment carte à puce,
comportant un premier circuit (1),
comportant au moins une bobine (2) qui est reliée par l'intermédiaire d'une interface sans contact au premier circuit (1), l'interface sans contact obtenant à partir d'un signal induit dans la bobine (2) au moins une tension (VDD, VSS) continue d'alimentation, un signal d'horloge et un signal de données correspondant à une modulation du signal induit,
comportant une pluralité de contacts (3) pour la réception d'au moins une tension d'alimentation, d'un signal d'horloge et d'un signal de données, qui sont reliés au premier circuit (1),
le contact (VCC) de tension d'alimentation pouvant être relié au premier circuit (1) par l'intermédiaire d'un élément (5) de commutation qui est réalisé de manière à pouvoir être commandé, et
comportant un deuxième circuit (4 ; 40) logique qui est relié côté entrée au contact (CLK) pour signal d'horloge et côté sortie à l'entrée de commande de l'élément (5) de commutation, caractérisé en ce que le premier circuit est un circuit de traitement de données.

2. Support de données suivant la revendication 1, caractérisé en ce que le deuxième circuit (40) logique comporte un élément (7 ; 12) redresseur pour obtenir une tension d'alimentation à partir du signal d'horloge.

3. Support de données suivant la revendication 1, caractérisé en ce que le deuxième circuit (4) logique est relié aux contacts (VCC, VSS) de tension d'alimentation.

4. Support de données suivant l'une des revendications précédentes, caractérisé en ce que la sortie du deuxième circuit (4 ; 40) logique est reliée à une entrée de commande d'un régulateur (10) de tension monté en amont du premier circuit (1) logique.
